Europäisches Patentamt

European Patent Office

Office européen des brevets

(19)

(11) Publication number: **0 369 734 A2**

## EUROPEAN PATENT APPLICATION

(21) Application number: 89311761.4

(22) Date of filing: 14.11.89

(51) Int. Cl.⁵: **C08L 67/02**, //(C08L67/02, 67:00)

(30) Priority: 14.11.88 US 270192

(43) Date of publication of application:
23.05.90 Bulletin 90/21

(84) Designated Contracting States:
AT BE CH DE FR GB IT LI LU NL SE

(71) Applicant: AMOCO CORPORATION
200 East Randolph Drive
Chicago Illinois 60601(US)

(72) Inventor: Leutkens, Melvin Louis, Jr.
1269 North Avenue
Batavia Illinois 60510(US)
Inventor: Paschke, Edward Ernest
25 W 681 Coventry Court
Wheaton Illinois 60187(US)

(74) Representative: Hardisty, David Robert et al
BOULT, WADE & TENNANT 27 Furnival Street
London EC4A IPQ(GB)

(54) **Improving the thermal properties of a polyalkyleneterephthalate without significant loss of physical and low temperature properties.**

(57) Polyalkyleneterephthalate blends containing about 3 and about 30 weight percent of a melt-processable polyarylate liquid crystal polymer, preferably containing an impact modifier, are shown to have significantly enhanced thermal properties while maintaining substantially the mechanical and low temperature properties of the polyalkyleneterephthalate. The blends are suitable for making molded objects such as permanent ovenware capable of repeated use in both conventional thermal and microwave ovens. A significant use of the polyethyleneterephthalate blends is in the thermoformable, CPET, dual-ovenable tray market.

EP 0 369 734 A2

# IMPROVING THE THERMAL PROPERTIES OF A POLYALKYLENETEREPHTHALATE WITHOUT SIGNIFICANT LOSS OF PHYSICAL AND LOW TEMPERATURE PROPERTIES

## Background of the Invention

This invention relates to polymer compositions containing liquid crystal polymer (LCP) based upon polyalkyleneterephthalate (PAT) which exhibit improved thermal properties while substantially maintaining the mechanical and low temperature impact properties of the PAT. More particularly, this invention relates to molded objects such as permanent ovenware capable of repeated use in both conventional thermal and microwave ovens made from composites of polyethyleneterephthalate (PET) containing a minor amount of a LCP composed of 6-oxy-2-naphthoyl and p-oxybenzoyl moieties, which composites have improved higher temperature dimensional stability but substantially the same mechanical and low temperature properties as PET.

The market for thermoformable, crystallized PET tray materials is estimated to be soon at least two billion units with an even larger future growth. Since crystallized PET has marginal properties at the temperatures used in conventional ovens (400~F), there is a need to develop new materials with higher heat resistance. These new materials must maintain the mechanical, electrical, and, particularly, low temperature impact properties of the current materials as their use for trays often involves storage at freezer temperatures and subsequent heating in a conventional or microwave oven. In addition, development of new materials for this use must improve the high temperature properties at a reasonable cost.

Ovenware made of LCP polymer alone has excellent properties but are too expensive for most uses and so the addition of various cheaper polymers and fillers such as talc have been suggested to reduce the price of the finished molded object. See U.S. Pat. No. 4,626,557 and U.S.S.N. 255,753, filed October 11, 1988. Another possible way to produce such new materials is to melt blend a liquid crystal polymer with the PET, which ideally would improve the stiffness of the PET (high temperature properties) and maintain the other PET properties.

In order to be melt coprocessed with PET, the LCP must be processable without substantial decomposition in the temperature range required by for PET, and for food uses, the LCP must have passed stringent governmental tests. These two requirements severely limit the LCPs which are useful in molded articles for food uses. Since the LCPs which meet these latter requirements for use in PET are expensive, the technique of substantially changing PET physical properties by adding a compatible LCP would not appear to be fruitful except when the cost can be justified. This is particularly so as it is believed that rather large amounts of an LCP in such composites are required before the properties of the composite are changed much.

An apparent exception to this general statement is contained in Japanese work wherein it is taught that the mechanical properties of oriented films of certain polymers including PET can be enhanced at low LCP levels by making a well-dispersed blend of the polymer with a liquid crystal polymer such as the copolymer of p-hydroxybenzoic acid and 6-hydroxy-2-naphthoic acid. U.K. Patent application 2,008,598 teaches that up to 20 percent by weight of "a rigid polymeric material comprised substantially of rigid molecular chains having an average chain length of 50 A or more" in, for example, PET can considerably improve oriented film mechanical properties when the rigid polymer is "uniformly dispersed in the PET in microscopic regions of 1 micrometer or less." Example 4 of that reference employs 3 percent of an LCP containing terephthoyl, 2,6-dioxynaphthalene, and 2-chloro-1,4-dioxybenzene moieties in PET which was wet-cast to form a film from p-chlorophenol.

In contrast, U.S. Patent Nos. 4,408,022, 4,451,611, and 4,489,190 teach that the amount of LCP, when melt blended into PET, which is required to materially change the mechanical properties is very substantial. While U.S. Patents 4,408,022 and 4,451,611 teach a post polymerization of the PET/LCP blend and the LCP respectively in order to maximize the improvement in mechanical properties, U.S. Patent No. 4,489,190 teaches that improvement can be obtained without a post-polymerization step. Together, the three patents teach that the amount of LCP required in the blend must be more than about 50 weight percent to give a material improvement in mechanical properties.

In respect of the enhancement of thermal properties, the '190 patent in Example III shows that a PET blend with a LCP component composed of 4-oxybenzoyl units, 2,6-dioxynaphthoyl units, and terephthaloyl units, must contain over fifty weight percent LCP to substantially affect the heat deflection temperature when it is measured under a load of 264 psi. Determination of heat deflection temperature at a loading of 264 psi is conventional for many polymers although HDTs measured at 66 psi are more indicative of high temperature performance in tray applications.

Thus, the art teaches (1) that a PET-LCP blend must contain a large fraction of LCP before the heat deflection temperature, and, inferentially other thermal properties, measured at 264 psi are markedly improved, and (2) the amount of LCP required to change the mechanical properties can be small or large depending possibly upon the state of dispersion of the LCP and whether or not the resulting blend is tested as an oriented film.

Now it has been recognized that an LCP containing essentially 6-oxy-2-naphthoyl and p-oxybenzoyl units, when combined with PET, significantly improves the thermal properties of the PET including the heat deflection temperature and high temperature flex modulus and strength, when measured at 66 rather than 264 psi (a test more suitable for the use intended here), but does not substantially degrade the physical and low temperature properties of the PET at LCP levels up to 30 weight percent--quantities of LCP small enough to be used in mass market-low cost, thermoformable PET trays. The compositions display a combination of excellent mechanical, thermal and electrical properties which allows fabrication of the compositions into containers for the cook-in container market.

## Brief Description of the Invention

The invention described herein is a molded object comprising a blend of polyalkyleneterephthalate and a polyarylate liquid crystal polymer, said blend containing between about three and about thirty weight percent of said polymer, melt processable without substantial decomposition in the temperature range from about 450 to about 600~F, and having a substantially greater heat deflection temperature than PET when measured at a load of 66 psi. In another aspect, this invention is directed to a molded object comprising a blend of polyethylene terephthalate containing up to 8 percent by weight impact modifier and a melt-processable liquid crystal polymer composed of 6-oxy-2-naphthoxyl and p-oxybenzoyl moieties, said blend containing between three and about thirty weight percent of said polymer, melt processable without substantial decomposition in the temperature range from about 450 to about 600~F, and having a substantially greater heat deflection temperature than PET when measured at a load of 66 psi.

## Detailed Description of the Invention

The present invention provides a blend of polyalkylene terephthalate and melt processable, wholly aromatic polyester. As used herein, the term "blend" includes any physical blend, mixture, or alloy of the above polymeric components.

The first component of the blend provided by the present invention is a polyalkylene terephthalate. These polymers are available commercially or can be prepared by known techniques such as by the alcoholysis of esters of terephthalic acid with alkylene glycols and subsequent polymerization, by heating the glycols with the free acids or with halide derivatives thereof, and similar processes.

The alkylene units of the polyalkylene terephthalate which are suitable for use in the present invention contain from two to five carbon atoms. The alkylene units preferably contain two to four carbon atoms, and most preferably contain two carbon atoms. Thus, polyethylene terephthalate is the preferred polyalkylene terephthalate for use in the blends of the present invention. Other suitable polyalkylene terephthalates include polybutylene terephthalate, polyisobutylene terephthalate, polypentyl terephthalate, polyisopentyl terephthalate, and polyneopentyl terephthalate. As indicated by the examples listed above, the alkylene units may be straight chains or branched chains.

The wholly aromatic polyesters which may be used as a component in the blend of the present invention comprise at least two recurring moieties which, when combined in the polyester, have been found to form an anisotropic melt phase until about 500 to 510~C. The aromatic polyesters are considered to be "wholly" aromatic in the sense that each moiety present in the polyester contributes at least one aromatic ring to the polymer backbone. To be useful in this invention they have to melt process without substantial decomposition within the melt-processing temperature window of the polyalkylene terephthalate. More preferably they should melt process within the temperature range from about 450 to about 600~F.

Wholly aromatic polyester resins have been known for some time. For instance, 4-hydroxybenzoic acid homopolymer and copolymers with 6-hydroxy-2-naphthoic acid have been made and are commercially available. Certain of the wholly aromatic polyesters encountered in the prior art tend to be somewhat intractable in nature and to present substantial difficulties if one attempts to melt process the same while employing conventional melt processing procedures. Such polymers commonly are crystalline in nature, relatively high melting or possess a decomposition temperature which is below the melting point, and when molten frequently exhibit an isotropic melt phase. Molding techniques such as compression molding or sintering may be utilized with such materials; however, injection molding, melt spinning, etc., commonly have not been viable alternatives or when attempted commonly have been accomplished with difficulty. It is to be understood that the wholly aromatic polyesters which are suitable for use in the present invention are limited to those which are capable of undergoing melt processing, i.e., those which exhibit no substantial decomposition at or below the melting temperature.

The wholly aromatic polyesters which are suitable for use in the blend of the present invention may be formed by a variety of ester-forming techniques whereby organic monomer compounds possessing functional groups which upon condensation form the requisite recurring moieties are reacted. For instance, the functional groups of the organic monomer compounds may be carboxylic acid groups, hydroxyl groups, ester groups, acyloxy groups, acid halides, etc. The organic monomer compounds may be reacted in the absence of a heat exchange fluid via a melt acidolysis procedure. They, accordingly, may be heated initially to form a melt solution of the reactants with the reaction continuing as solid polymer particles are suspended therein. A vacuum may be applied to facilitate removal of volatiles formed during the final stage of the condensation (e.g., acetic acid or water).

The wholly aromatic polyesters suitable for use in the present invention tend to be substantially insoluble in common polyester solvents and accordingly are not susceptible to solution processing. As discussed previously, they can be readily processed by common melt processing techniques. Most suitable wholly aromatic polyesters are soluble in pentafluorophenol.

The wholly aromatic polyesters which are suitable for use in the blend of the present invention commonly exhibit a weight average molecular weight of about 2,000 to 200,000, and preferably about 10,000 to 50,000, e.g., about 20,000 to 25,000. Such molecular weight may be determined by standard techniques not involving dissolution of the polymer, e.g., by end group determination via infrared spectoscopy on compression molded films. Alternatively, light scattering techniques in a pentafluorophenol solution may be employed to determine the molecular weight.

The wholly aromatic polyesters additionally commonly exhibit an inherent viscosity (i.e., I.V.) of at least approximately 2.0 dl./g., e.g., approximately 2.0 to 8.0 dl./g., when dissolved in a concentration of 0.1 percent by weight in pentafluorophenol at 60~C.

The blend of the present invention comprises approximately 70 to approximately 99 percent by weight of the polyalkylene terephthalate component and approximately 3 to approximately 30 percent by weight of the wholly aromatic polyester component. Preferably, the blend comprises at least approximately 3 percent by weight of the wholly aromatic polyester component. More preferably, the blend comprises approximately 80 to approximately 95 percent by weight of the polyalkylene terephthalate component and approximately 5 to approximately 20 by weight of the wholly aromatic polyester component. The above weight percentages are based upon the total weight of the wholly aromatic polyester component and the polyalkylene terephthalate component.

The blends of the present invention are capable of undergoing melt processing at a temperature within the range of approximately 400~ to 650~F. Preferably, the blend is capable of undergoing melt processing at a temperature within the range of approximately 450 to 600~F.

The heat deflection temperatures at 66 psi of these blends are at least 5~F, more preferably 20~F greater than the underlying polyalkylene terephthalate. Most preferably, the increase is at least 30~F greater than the polyalkyleneterephthalate.

For best results the blends which are largely the polyalkylene terephthalate should contain up to about 8, more preferably up to about 5, weight percent of impact modifier such as polyethylene, polypropylene, an ethylene-acrylic acid copolymer, or an ethylene-propylenediene rubber. The addition of such a material improves the low temperature properties of molded articles from the polyalkylene terephthalate blends for uses such as dual-ovenable trays. The blends can also contain small amounts of other materials such as fillers, reinforcements, stabilizers, and the like as can be understood by one skilled in the art.

The blends of the present invention are useful as a molding resin, and especially for injection molding. Articles molded from the blend of the present invention exhibit good mechanical properties, such as tensile strength, tensile modulus, flexural strength, flexural modulus, notched Izod impact strength, and improved thermal properties such as the heat deflection temperature.

In order to form an article by injection molding from the present blend, or from a molding compound made from the present blend, the blend or molding compound is brought to the melt temperature of the blend, e.g., approximately 280~C. to 300~C., and is then injected into a mold cavity. The mold cavity is

4

commonly maintained at a temperature less than approximately 100~C., e.g., approximately 90~C. to 100~C. The blend in its melt phase is injected into the mold cavity at a pressure of approximately 10,000 p.s.i. The cycle time (i.e., the time between injections) for the present blend commonly is about 10 to 40 seconds.

The properties of articles formed from blend compositions of the present invention can be improved by heat treatment. The articles may be thermally treated in an inert atmosphere (e.g., nitrogen, argon, helium) or alternatively a flowing oxygen-containing atmosphere (e.g., air). For instance, the article may be brought to a temperature approximately 10~C. to 30~C. below the melting temperature of the blend, at which temperature the article remains a solid object. The heat treatment times commonly range from a few minutes to a number of days, e.g., from 0.5 to 200 hours, or more. Preferably, the heat treatment is conducted for a time of 48 to 72 hours. The heat treatment improves the properties of the article by increasing the molecular weight of the liquid crystalline polymer and increasing the degree of crystallinity.

Heat treatment has been observed to significantly increase the heat deflection temperature of the blend. The heat deflection temperature is a measure of the upper temperature at which articles formed from the blend can be effectively used. The blend of the present invention can be characterized as a high performance blend in that it is capable of forming shaped articles having heat deflection temperature improvements as stated above. Thus, the blends of the present invention are useful in applications involving relatively high temperatures.

The following Examples will serve to illustrate certain specific embodiments of the herein disclosed invention. These Examples should not, however, be construed as limiting the scope of the invention contained herein as there are many variations which may be made thereon without departing from the spirit of the disclosed invention, as those of skill in the art will recognize.


## EXAMPLES


## Example 1


Several dry blends of variable composition were made from Traytuf 9506C (crystalline polyethylene terephthalate made by the Goodyear Corp.) to which was added about 3% by weight NA-1 (polyethylene) impact modifier and Vectra A950 (LCP), made by Celanese Corp., which is a 45%-55% copolymer of p-hydroxybenzoic acid and 6-hydroxy-2-naphthoic acid. All samples were dried for 16 hrs in vacuo at 120~C and molded into test bars on an Arburg 221 injection molding machine at 350 psi, and 180 RPM using the following temperature profile: 510/530/530~F, mold temperature 150~F. To emulate the operation of a thermoforming process on the samples, they were annealed at 160~C for 1 hr. Physical properties of the test bars are as shown in Table 1 below.

## Table 1

| % Comp. (LCP/PET) | 0/100 | 5/95 | 10/90 | 20/80 |
|---|---|---|---|---|
| HDT ($^\sim$F at 66 psi)* | 322 | 329 | 380 | 415 |
| HDT ($^\sim$F at 264 psi)* | 195 | -- | 196 | 202 |
| Flex Modulus (Psi) | 427,850 | 470,820 | 509,808 | 675,261 |
| Flex Strength (Psi) | 16,113 | 15,701 | 18,363 | 19,441 |
| Flex Modulus at 400$^\sim$F | 14,200 | 23,000 | 43,700 | 74,600 |
| Flex Strength at 400$^\sim$F | 556 | 582 | 576 | 599 |
| TIS** at 0$^\sim$F ($ft-lbs/in^2$) | 33 | 32 | 31 | 23 |
| TIS** at -40$^\sim$F ($ft-lbs/in^2$) | 35 | 44 | 32 | 46 |

\* ASTM D648

\*\* Tensile impact strength

## Table 1 (Continued)

| % Comp. (LCP/PET) | 50/50 | 75/25 | 100/0 |
|---|---|---|---|
| HDT ($^\sim$F at 66 psi)* | 436 | 441 | 431 |
| HDT ($^\sim$F at 264 psi)* | 362 | 375 | -- |
| Flex Modulus (Psi) | -- | -- | 1,413,400 |
| Flex Strength (Psi) | -- | -- | 26,284 |
| Flex Modulus at 400$^\sim$F | -- | -- | -- |
| Flex Strength at 400$^\sim$F | -- | -- | -- |
| TIS** at 0$^\sim$F ($ft-lbs/in^2$) | -- | -- | -- |
| TIS** at -40$^\sim$F 35 ($ft-lbs/in^2$) | -- | -- | -- |

\* ASTM D648

\*\* Tensile impact strength

## Example 2

Several dry blends were made from polybutylene terephthalate (PBT) and a wholly aromatic polyester LCP. Both resins are commercially available, the PBT from General Electric Co. under the trademark Valox 325 and the LCP is from Celanese Corp. under the trademark Vectra A950. The wholly aromatic polyester was dry blended with the PBT in weight ratios of LCP:PBT of 10:90, 20:80 and 50:50. The blends were dried in vacuo at 120~C for 16 hours and then molded into test bars on an Arburg injection molding machine. Molding conditions were 400 psi and 180 RPM using the following temperature profile: 510/530/530~F, mold temperature 150~F. The bars were annealed at 160~C for one hour to emulate thermoforming conditions. The heat deflection temperatures of the bars are provided in Table 2 below.

Table 2

| % Comp. (LCP/PBT) | 0/100 | 10/90 | 20/80 | 50/50 | 100/0 |
|---|---|---|---|---|---|
| HDT ($^\sim$F at 66 psi) | 332 | 356 | 431 | 430 | 431 |
| HDT ($^\sim$F at 264 psi) | 135 | 173 | 184 | 378 | -- |

## Example 3

Several dry blends were made from polyethylene terephthalate and wholly aromatic polyester LCP. Goodyear Corp. 9506C PET and Eastman Co. 10109 LCP, a wholly aromatic polyester composed of 80 mol percent of the p-oxybenzoyl moiety, were dry blended in weight ratios, LCP:PET, of 10/90 and 20/80. The resins were dried in vacuo at 120~C in vacuo for 16 hours and then molded into test bars on an Arburg injection molding machine. Molding conditions were 475 psi and 180 RPM using the following temperature profile: 520/560/540~F, mold temperature 150~F. The bars were annealed at 160~C for one hour to emulate the thermoforming process. The heat deflection temperatures of the test bars are provided in Table 3 below.

Table 3

| % Comp. (LCP/PET) | 0/100* | 10/90 | 20/80 | 100/0 |
|---|---|---|---|---|
| HDT ($^\sim$F at 66 psi) | 322 | 329 | 335 | 365 |
| HDT ($^\sim$F at 264 psi) | 195 | 203 | 204 | 286 |

* The PET contains about 3 percent of polyethylene

## Example 4

Several melt blends were made from polyethylene terephthalate and wholly aromatic polyester LCP. The polyethylene terephthalate is commercially available Goodyear Traytuf 9506C to which about 3 percent of polyethylene was added, and the LCP is commercially available from Celanese under the trademark Vectra A950. The wholly aromatic polyester was melt blended with PET on a single screw extruder (Brabender) at temperatures of 225-285~C in weight ratios of LCP:PET of 5:95 and 20:80. The blends were dried in vacuo at 120~C for 16 hr and then molded into test bars on an Arburg injection molding machine. Molding conditions were 350 psi and 180 RPM using the following temperature profile: 510/530/530~F, mold temperature 150~F. To emulate the thermoforming process the bars were then annealed at 160~C for 1 hr. The heat deflection temperatures of the test bars are provided in Table 4 below.

Table 4

| % Comp. (LCP/PET) | 0/100 | 5/95 | 20/80 | 100/0 |
|---|---|---|---|---|
| HDT ($~$F at 66 psi) | 322 | 330 | 391 | 431 |
| HDT ($~$F at 264 psi) | 195 | -- | -- | -- |

Example 5

Two samples, 10/90% Vectra/PET and 20/80% Vectra/PET, both containing no impact modifier, were dry blended in a V-cone blender. The two blends and a PET sample of TrayTuf 9506C to which about 3 percent of polyethylene was added were dried to about 20 ppm of moisture and extruded using the conditions in Table 5 below into 30 mil sheet. In the same way, the sample of PET to which about 3 percent of polyethylene was added was also dried and extruded into sheet. The PET sheet was 40 mils in thickness and the two LCP/PET sheets were each 30 mils in thickness.

Table 5

| Extrusion Conditions | | | |
|---|---|---|---|
| LCP % | 0% | 10% | 20% |
| Barrel 1 | 550$~$F | 550$~$F | 545$~$F |
| 2 | 540 | 540 | 532 |
| 3 | 540 | 539 | 532 |
| 4 | 540 | 540 | 535 |
| 5 | 540 | 540 | 535 |
| Screen Changer | 530 | 530 | 520 |
| Adapter 1 | 530 | 530 | 509 |
| MTR Pump | 530 | 530 | 500 |
| Adapter 2 | 530 | 530 | 496 |
| Die Block 1 | 490 | 490 | 490 |
| 2 | 490 | 490 | 490 |
| 3 | 490 | 490 | 490 |
| Die 1 | 490 | 490 | 490 |
| 2 | 490 | 490 | 490 |
| 3 | 490 | 490 | 490 |
| Top Roll | 140 | 140 | 120 |
| Middle Roll | 150 | 150 | 150 |
| Bottom Roll | 125 | 125 | 125 |

The three sheet samples, 10/90% Vectra/PET, 20/80% Vectra/PET and the Traytuf 9506C PET to which about 3 percent of polyethylene was added were thermoformed using a shuttle lab former. The sheet was rapidly heated (800$~$F oven temperature) to relieve strain and initiate crystallization. It was subsequently thermoformed into trays on a heated mold (330$~$F), then cooled and trimmed. See Table 6 below for the thermoforming conditions used.

Table 6

| Tray Thermoforming Conditions* | | | |
|---|---|---|---|
| LCP % | 0% | 10% | 20% |
| Top Oven (˜F) | 800 | 800 | 800 |
| Bottom Oven (˜F) | 800 | 800 | 800 |
| Oven Time (sec) | 16.5 | 16.5-15.2 | 16.9-15.9 |
| Mold Temperature (˜F) | 330 | 330 | 330 |

*Crystallinity of all trays was about 30 percent as measured by specific gravity.

Example 6

The trays made in Example 5 were tested for ovenability, drop test ability, thickness and weight.

Procedures

Ovenability -

Five trays of each of the three sheet types were tested. The samples were prepared by filling them with "water potatoes" to fill heights that varied between 353 and 364 grams. Water potatoes are made with potato flake and water instead of milk. After being filled, the trays were frozen at -15 ˜F for at least 16 hr prior to testing. The testing consisted of placing the frozen trays one at a time in a conventional oven and cooking them for sixty minutes at 400 ˜F. After heating, the trays were removed from the oven and the oven temperature at time of removal was recorded. Each tray was then inspected for distortion and softness.

Low temperature Gardner drop impact test -

A Gardner impact tester was used employing a modified ASTM D-3029 procedure at -15˜F. A trial was considered a failure if it resulted in a break, crack, or hole that penetrated the entire thickness of the sample. The impact strength of a batch of samples was defined to be the impact energy where fifty percent of the batch samples failed. The samples were all placed in the environmental chamber at -15 ˜F for at least 16 hr and then removed one at a time for testing. Each sample was tested exactly 25 sec after being removed from the environmental chamber so that the amount of heat gain for the trays would remain constant before testing.

Weight and bottom thickness -

Ten trays of each material were weighed and their bottom thicknesses measured with a Magna-mike instrument.

Results

These are set out in the paragraph and Table 8 below.

Ovenability -

The trays made from 20% LCP performed the best. They were most stable upon removal from the oven. The 20% LCP trays were stiffer than the 10% LCP trays.

Table 8

| Low Temperature Gardner Drop Impact Test | | | |
|---|---|---|---|
| LCP % | 0%* | 10% | 20% |
| Weight (g) | | | |
| min | 20.24 | 19.33 | 19.34 |
| max | 21.36 | 19.94 | 20.06 |
| avg | 20.99 | 19.59 | 19.83 |
| Thickness (mils) | | | |
| min | 18 | 15 | 15 |
| max | 25 | 18 | 18 |
| avg | 21 | 16.7 | 16.6 |
| Impact Strength at -15°F (in-lbs) | 50 | 15 | 3 |

* The PET trays contain about 3% of polyethylene impact modifier and are not a control as they contain the impact modifier and are substantially thicker than the 10% LCP and 20% LCP trays.

## Claims

1. A molded object comprising a blend of a polyalkyleneterephthalate and a melt-processable, polyarylate liquid crystal polymer, said blend containing between about three and about thirty weight percent of said polymer, melt-processable without substantial decomposition in the temperature range from about 450°CF (232.2°C) to about 600°F (315.6°C), and having a greater heat deflection temperature than said polyalkyleneterephthalate when measured at a load of 66 psi.

2. A molded object as claimed in claim 1 containing up to about eight percent by weight of an impact modifier.

3. A molded object as claimed in claim 1 or 2 wherein said polyarylate liquid crystal polymer is composed of at least the p-oxybenzoyl moiety.

4. A molded object as claimed in any one of the preceding claims wherein said object is a thermoformable, dual-ovenable tray.

5. A molded object as claimed in any one of the preceding claims containing between about five and about twenty weight percent of said melt-processable, polyarylate liquid crystal polymer.

6. A molded object comprising a blend of polyethyleneterephthalate and a melt-processable, polyarylate liquid crystal polymer, said blend containing between about three and about thirty weight percent of said polymer, melt-processable without substantial decomposition in the temperature range from about 450°F (232.2°C) to about 600°F (315.6°C), and having a greater heat deflection temperature than said polyethylene terephthalate when measured at a load of 66 psi.

7. A molded object as claimed in claim 6 containing up to about eight percent by weight of an impact modifier selected from the group consisting of polyethylene, polypropylene, ethylene-acrylic acid copolymers, and ethylene-propylene-diene rubbers.

8. A molded object as claimed in any one of the preceding claims wherein said polyarylate liquid crystal polymer is composed of 6-oxy-2-naphthoxy and p-oxybenzoyl moieties.

9. A molded object as claimed in claim 7 or claim 8 wherein said object is a thermoformable, dual-ovenable tray.

10. A molded object as claimed in any one of claims 6, 7 or 8 containing between about five and about twenty weight percent of said melt-processable, polyarylate liquid crystal polymer.